# EUROPEAN PATENT SPECIFICATION

(11) **EP 2 183 704 B1**
(45) Date of publication and mention of the grant of the patent: **11.01.2012**
(21) Application number: 07808095.9
(22) Date of filing: 06.09.2007
(51) Int. Cl.: G06K 17/00

(54) **MEMORY CARD CHANGER, METHOD FOR READING OR WRITING DATA IN MEMORY CARD CHANGER**
SPEICHERKARTENWECHSLER, VERFAHREN ZUM LESEN ODER SCHREIBEN VON DATEN IN EINEM SPEICHERKARTENWECHSLER
DISPOSITIF DE CHANGEMENT DE CARTE MÉMOIRE, PROCÉDÉ DE LECTURE OU D'ÉCRITURE DE DONNÉES DANS UN DISPOSITIF DE CHANGEMENT DE CARTE MÉMOIRE

(30) Priority: 23.08.2007 KR 20070085159
(43) Date of publication of application: 12.05.2010
(73) Proprietor: Unidue Co., Ltd., Cheongwon-kun Chungbuk-Provice 363-883 (KR); Chungbuk Technopark, Cheongwon-kun Chungbuk-Province 363-883 (KR)
(72) Inventor: KIM, Chang-Ki, Seoul 152-020 (KR); AHN, Seung-Won, Seongnam-si Gyeonggi-do 463-060 (KR); JEONG, Seok-Yeon, Seongnam-si Gyeonggi-do 463-070 (KR)
(74) Representative: Coyle, Philip Aidan
(86) International application number: PCT/KR2007/004302
(87) International publication number: WO 2009/025407

(56) References cited:
- JP-A- 07 236 111
- JP-A- 2006 119 954
- KR-A- 20050 108 723
- US-A1- 2003 084 221
- US-A1- 2003 084 221

## Description

### [Technical Field]

The present invention relates to a memory card changer, more specifically to a memory card changer that can integratedly manage the storage capacity of memory cards inserted into the memory card changer.

### [Background Art]

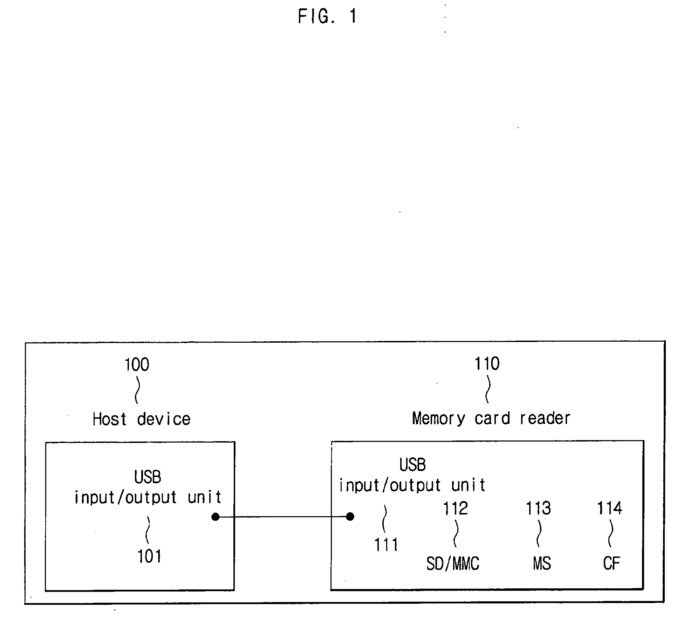

Figure 1 shows a memory card reader in accordance with the related art.

Referring to Figure 1, a conventional memory card reader includes a universal serial bus (USB) input/output unit 111 that is to be connected with a host device 100 and memory card slots 112 to 114.

The USB input/output unit 111 is for interchanging data between the host device 100 and a memory card having been inserted into a memory card reader 110 by using a USB interface.

In the memory card slot 115 can be inserted a SD (secure digital) / MMC (multimedia card) 112, a MS (memory stick) 113 and a CF (compact flash) memory card 114.

The memory card reader 110 in accordance with the related art recognizes each memory card inserted into the memory card slots 112 to 114 as an independent mobile storage media. Therefore, the memory card reader 110 in accordance with the related art has a limited use in which the storage capacity of the memory cards is not integratedly used.

For instance, suppose that the host device 100 is to store contents data of 1.5 gigabyte in a memory card inserted into the memory card reader 110. Here, suppose the storage capacity of the SD 112 memory card is 1 gigabyte, the storage capacity of the MS 113 is 0.5 gigabyte and the storage capacity of the CF 114 is 0.5 gigabyte. Accordingly, the integrated storage capacity of the three memory cards is a total of 2 gigabyte that is greater than a combined total of 1.5 gigabyte of the contents data.

However, the memory card reader 110 in accordance with the related art only recognizes memory cards inserted in the memory card slots 112 to 114 as independent removable disks. For that reason, the contents data can be stored in the memory cards only if the contents data is divided into smaller data in terms of storage capacity in accordance with the individual storage capacity of each memory card through such a compression program, etc.

An example of such a prior art memory card reader is described in US 2003/0084221. US 2003/0084221 discloses a memory card changer being connected to a host device and reading data stored in a plurality of memory cards or storing data in the plurality of memory cards, the memory card changer comprising a connection unit, configured to interchange the data with the host device, a slot unit, the plurality of memory cards being attachable to the slot unit, and a processing unit, configured to allow the host device to recognize each capacity of the plurality of memory cards, each of the plurality of memory cards having being inserted into the slot unit.

Thus, in order to solve the problems described above, the present invention provides a memory card changer according to claim 1. In particular, the memory card integratedly manages each storage capacity of multiple memory cards inserted into the memory card changer. The present invention also provides a memory card changer that allows a host device to recognize a plurality of memory cards having smaller storage capacities as a large storage capacity of memory. The present invention also provides a memory card changer that can calculate an integrated file allocation table (FAT) used for recognizing the plurality of memory cards as a integrated memory card having a large storage capacity by using individual file allocation tables (FAT) of the plurality of memory cards. Other problems that the present invention solves will become more apparent through the following embodiments described below.

To achieve the foregoing objectives and resolve the problems of the related art, an aspect of the present invention provides a memory card changer. The memory card changer being connected to a host device and reading data stored in a plurality of memory cards or storing data in the plurality of memory cards, the memory card changer including a connection unit, configured to interchange the data with the host device; a slot unit, the plurality of memory cards being attachable to the slot unit; and a processing unit, configured to allow the host device to recognize each capacity of the plurality of memory cards individually or integratedly, each of the plurality of memory cards having been inserted into the slot unit.

Here, the memory card changer can further include a switch configured to select one of an integrated mode and an independent mode, the integrated mode recognizing each storage capacity integratedly, the independent mode recognizing each storage capacity individually, where if the integrated mode is selected, the processing unit can allow the host device to recognize a storage capacity integrated from each of the storage capacities of the plurality of memory cards

Here, if the integrated mode is selected and a write command is received from the host device, the processing unit can divide data received from the host device and transmit the divided data to each slot of the slot unit.

Here, the processing unit can transmit the data to an *N*th slot of the slot unit. If a capacity occupied by the data that is being stored in an *N*th memory card (*N* being a pre-designated number) reaches a pre-determined level, the *N*th memory card being inserted into the *N*th slot, storing the data can be stopped; *N*th division information is generated and stored in the *N*th memory card; and data next to last data that has stored in the *N*th memory card, is transmitted to an *N*+*1*th slot of the slot unit.

Here, the N can be designated in a descending order in accordance with the storage capacity of the memory cards inserted in the slot unit.

If the integrated mode is selected and a command to read data is received from the host device, the processing unit can extract the division information from the memory cards, respectively having been inserted into the slot unit and transmit the data stored in the memory cards to the connection unit by using the division information,
whereithe division information, stored in the memory card when the data is divided and stored, includes information on how the data is divided and stored in the memory cards.

The memory card changer can further include a conversion unit, configured to convert one of a first transfer method and a second transfer method to the other transfer method, the data being received from and transferred to the connection unit by using the first transfer method, the data being received from and transferred to the slot by using the second transfer method, and each of the transfer methods corresponding to an interface type of the connection unit and the memory cards in the slot unit.

The memory card can be one of Compact Flash (CF), Smart Media (SM), MultiMediaCard (MMC), xD-Picture Card (xD), Memory Stick (MS), Memory Stick Duo (MS Duo), Memory Stick Pro Duo (MS Pro Duo), MagicGate (MG), Mini-Secure Digital (Mini SD), RS-MultiMediaCard (RS), Trans Flash (T-Flash), Memory Stick PRO true 4-bit (MS PRO) and Secure Digital (SD).

The connection unit can have one interface type of Universal Serial Bus (USB), Secure Digital (SD), MultiMediaCard (MMC), xD-Picture Card (xD) and Trans Flash (T-Flash).

Another aspect of the present invention provides a memory card changer. The memory card changer which is connected to a host device and reading data stored in a plurality of memory cards or storing data in the plurality of memory cards, including a connection unit, configured to interchange the data with the host device; a slot unit, the plurality of memory cards being attachable to the slot unit; and a processing unit, configured to allow the host device to recognize individual storage capacities of the plurality of memory cards individually or integratedly by using individual file allocation tables (FAT) of the plurality of memory cards, each of the plurality of memory cards having been inserted into the slot unit.

The processing unit can calculate an integrated file allocation table (FAT) by using the individual file allocation tables (FAT) and allows the host device to recognize the memory cards as a memory card having the integrated file allocation table (FAT).

The memory card changer can further include a switch configured to select one of an integrated mode and an independent mode, the integrated mode allowing the individual file allocation tables (FAT) to be recognized integratedly, the independent mode allowing the individual file allocation tables (FAT) to be recognized individually, where if the integrated mode is selected, the processing unit can allow the host device to recognize the individual file allocation tables (FAT) integratedly.

If the integrated mode is selected and a write command is received from the host device, the processing unit can divide data received from the host device and transmits the divided data to each slot of the slot unit, where the write command comprises FAT information related to memory cards, the data being to be stored in the memory cards. _

If the integrated mode is selected and a read command is received from the host device, the processing unit can read data from the memory cards of the slot unit and transmits the data to the connection unit, where the read command comprises FAT information related to memory cards, the data being read in the memory cards.

The switch can be mounted on each slot of the slot unit, and the processing unit can allow the switch to integratedly recognize the individual file allocation tables (FAT) of the memory card inserted in a slot, the slot being selected to be in the integrated mode.

The memory card changer can further include a conversion unit configured to convert one of a first transfer method and a second transfer method to the other transfer method, the data being received from and transferred to the connection unit by using the first transfer method, the data being received from and transferred to the slot by using the second transfer method, and each of the transfer methods corresponding to an interface type of the connection unit and the memory cards in the slot unit.

The memory card can be one of Compact Flash (CF), Smart Media (SM), MultiMediaCard (MMC), XD-Picture Card (XD), Memory Stick (MS), Memory Stick Duo (MS Duo), Memory Stick Pro Duo (MS Pro Duo), MagicGate (MG), Mini-Secure Digital (Mini SD), RS-MultiMediaCard (RS), Trans Flash (T-Flash), Memory Stick PRO true 4-bit (MS PRO) and Secure Digital (SD).

The connection unit can have one interface type of Universal Serial Bus (USB), Secure Digital (SD), MultiMediaCard (MMC), XD-Picture Card (XD) and Trans Flash (T-Flash).

Still another aspect of the present invention provides a method of storing data of a memory card changer. The method of storing received data in a plurality of memory cards inserted in a memory card changer can include (a) storing the data in an *N*th memory card (*N* being a pre-designated number); (b) stopping the storing the data and generating *N*th division information and storing the *N*th division information in the *N*th memory card, if a capacity occupied by the data that is being stored in the *N*th memory card reaches a pre-determined capacity level of the *N*th memory card; and (c) storing data next to last data that has stored in the *N*th memory card in an *N*+*1*th memory card, where the process (a) to the process (c) are repeated until the storing the data is completed.

The process (a) and the process (c) can further include transferring the data to the memory cards after the transfer method of transferring the data is converted in accordance with types of each interface of the memory cards.

The *N* can be designated numbers in a descending order in accordance with the storage capacity of the memory cards inserted in the slot unit.

Yet another aspect of the present invention provides a method of storing data of a memory card changer. The method of storing data received from a host device in a plurality of memory cards inserted in a memory card changer can include (a) extracting individual file allocation tables (FAT) of the memory cards; (b) calculating an integrated file allocation table (FAT) configured to allow a host device to recognize each storage capacity of the memory cards integrated by using the individual file allocation tables (FAT); (c) transmitting the integrated file allocation table (FAT) to the host device; and (d) storing the data into the memory cards, if the write command is received from the host device, where the write command can include FAT information related to memory cards, the data being to be stored in the memory cards.

The process (d) can further include a transfer method of transferring the data is converted in accordance with each interface of the memory cards and transmitting the data to the memory cards.

Yet another aspect of the present invention provides a method of storing data of a memory card changer. The method of reading data stored in a plurality of memory cards inserted in a memory card changer can include extracting division information from each of the memory cards; and reading the data stored in the memory cards by using the division information, where the division information, stored in the memory card when the data is divided and stored, includes information on how the data is divided and stored in the memory cards.

Yet another aspect of the present invention is to provide a method of storing data of a memory card changer. The method of reading data stored in a plurality of memory cards inserted into a memory card changer in accordance with a read command received from a host device can include reading the data from the memory cards in accordance with a signal of the read command, where the read command can include FAT information related to memory cards, the data being stored in the memory cards, and the FAT information can be created by using an integrated file allocation table (FAT) to recognize the plurality of memory cards integratedly, while the data is stored in the memory cards in advance.

### [Advantageous Effects]

The present invention provides a memory card changer that integratedly the manages of individual storage capacities of a plurality of memory cards inserted in the memory card changer.

The present invention also provides a memory card changer that recognizes a plurality of memory cards each having a small storage capacity as a large storage capacity of memory.

The present invention also provides a memory card changer that calculates an integrated file allocation table (FAT) being recognized as a large storage capacity of memory by using individual file allocation tables (FAT) of a plurality of memory cards.

The present invention also provides a memory card changer that can store a large capacity of data by using a plurality of memory cards having smaller individual storage capacities.

### [Description of Drawings]

Figure 1 shows a memory card reader in accordance with the related art.
Figure 2 shows the structure of a memory card changer in accordance with an embodiment of the present invention.
Figure 3 is a flow chart showing how a memory card changer stores data in accordance with a first embodiment of the present invention.
Figure 4 is a flow chart showing how a memory card changer reads data in accordance with a first embodiment of the present invention.
Figure 5 is a flow chart showing how a memory card changer stores data in accordance with a second embodiment of the present invention.
Figure 6 shows a process of calculating an integrated file allocation table (FAT) performed by a processing unit.
Figure 7 is a flow chart showing how a memory card changer reads data in accordance with a second embodiment of the present invention.

### [Mode for Invention]

Since there can be a variety of permutations and embodiments of the present invention, certain embodiments will be illustrated and described with reference to the accompanying drawings. This, however, is by no means to restrict the present invention to certain embodiments, and shall be construed as including all permutations, equivalents and substitutes covered by the scope of the present invention. Throughout the drawings, similar elements are given similar reference numerals. Throughout the description of the present invention, when describing a certain technology is determined to evade the point of the present invention, the pertinent detailed description will be omitted.

Terms such as "first" and "second" can be used in describing various elements, but the above elements shall not be restricted to the above terms. The above terms are used only to distinguish one element from the other.

The terms used in the description are intended to describe certain embodiments only, and shall by no means restrict the present invention. Unless clearly used otherwise, expressions in the singular number include a plural meaning. In the present description, an expression such as "comprising" or "consisting of" is intended to designate a characteristic, a number, a process, an operation, an element, a unit or combinations thereof, and shall not be construed to preclude any presence or possibility of one or more other characteristics, numbers, processs, operations, elements, units or combinations thereof.

Certain embodiments of the present invention will be described below in detail with reference to the accompanying drawings. For better understanding overall in describing aspects of the present invention, the same reference numerals are used for the same means, regardless of the figure number.

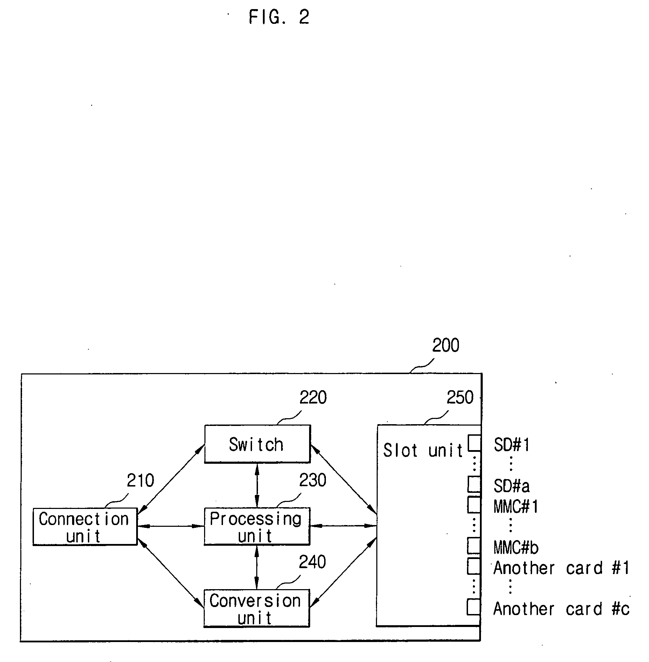

Figure 2 shows the structure of a memory card changer in accordance with an embodiment of the present invention.

Here, in order to describe a memory card changer 200 in accordance with certain embodiments of the present invention, a host device will be consistently referred to as a host device 100 illustrated in Figure 1.

Before a detailed description of the drawings, it is apparent that the distinction of elements is only for distinguishing the main functions of each element. That is, at least two elements can be integrated as one element, or an element can be functionally divided into more than two elements. Moreover, each element described below can perform not only its main functions, but also a part or the whole of functions of the other elements. Conversely, it is also possible that a part of the main functions, pertained to each element, can be fully performed by the other elements. Therefore, the existence of each element, explained in the description, can be functionally interpreted. For that reason, it shall be obvious that a configuration of the elements, in accordance with the memory card changer 200 of the present invention, can differ from one illustrated in Figure 2, without departing from the spirit and technical scope of the present invention.

Referring to Figure 2, in accordance with an embodiment of the present invention, a memory card changer 200 includes a connection unit 210, switches 220, a processing unit 230, a conversion unit 240 and a slot unit 250.

The connection unit 210 can interchange data between a host device 100 and a memory card changer 200. The connection unit 210 can also have a variety of interfaces for interchanging the data in accordance with interfaces supported by the host device 100.

For instance, the connection unit 210 can have one interface of Universal Serial Bus (USB), Secure Digital (SD), MultiMediaCard (MMC), xD-Picture Card (xD) and Trans Flash (T-Flash).

Below, suppose that the connection unit interchanges the data between the host device 100 and the memory card changer 200 by using a USB interface. The same will apply hereinafter. However, this is not intended to limit the present invention, which is evident to those with ordinary knowledge in the field of art to which the present invention belongs.

The slot unit 250 can have a plurality of slots to which a plurality of memory cards are attachable at the same time. For example, at least one type of memory cards of Compact Flash (CF), Smart Media (SM ), MultiMediaCard (MMC), XD-Picture Card (XD), Memory Stick (MS), Memory Stick Duo (MS Duo), Memory Stick Pro Duo (MS Pro Duo), MagicGate (MG), Mini-Secure Digital (Mini SD), RS-MultiMediaCard (RS), Trans Flash (T-Flash), Memory Stick PRO true 4-bit (MS PRO) and Secure Digital (SD) are attachable to the slot unit 250 in accordance with the present invention.

The conversion unit 240 can convert one of a first transfer method and a second transfer method to the other transfer method, data being received from and/or transferred to the connection unit 210 by using the first transfer method, and also data being received from and/or transferred to the slot unit 250.by using the second transfer method. For example, the conversion unit 240 can interchange the data with the host device 100 through the first transfer method (e.g.the Universal Serial Bus (USB) interface), and the slot unit 250 can interchange the data with a memory card through the second transfer method (e.g.a Secure Digital (SD) interface). Here, the conversion unit 240 can convert from the USB interface to the SD interface to receive the data from the connection unit 210 and transmit to the slot unit 250.

The Switch 220 can select one of an integrated mode or an independent mode, in which the integrated mode integratedly recognizes each storage capacity of the memory cards inserted into the slot unit 250 and the independent mode individually recognizes each of the storage capacities. The switch 220 can be mounted on each slot of the slot unit 250.

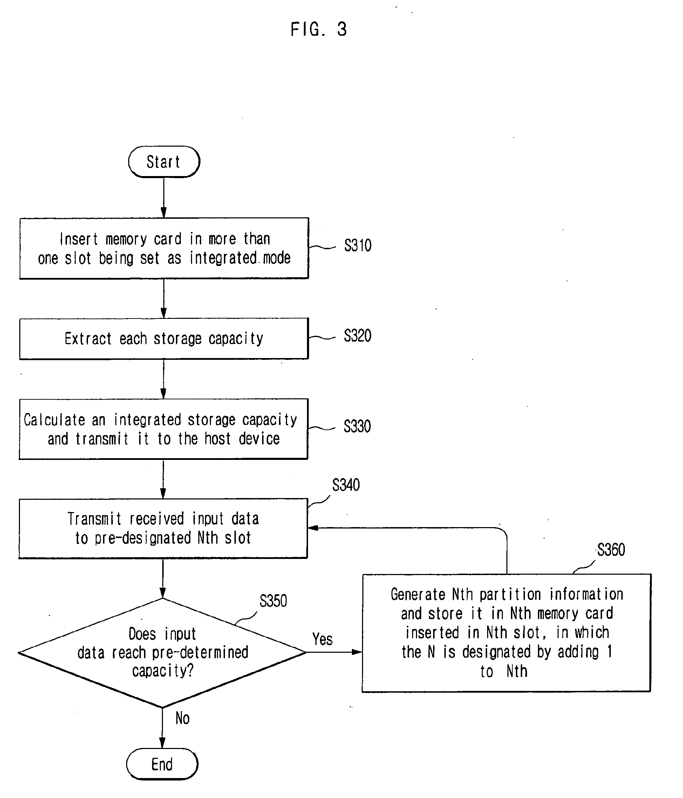

According to a first embodiment of the present invention, a processing unit 230 can separately transmit data received from the host device 100 to each slot in order by a pre-determined method. This will be described in more detail below as referring to Figure 3.

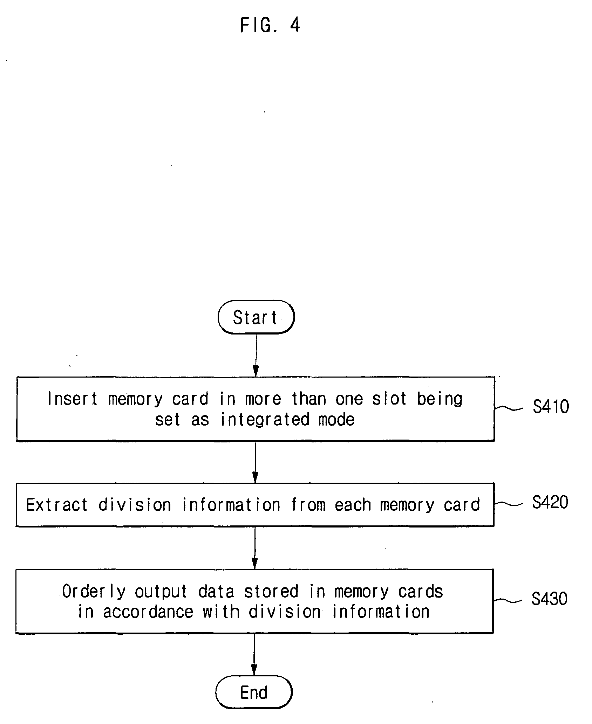

The processing unit 230 can also transmit the data that is separately stored in the memory cards inserted into each slot to the host device 100 through the connection unit 210. This will be described in more detail below as referring to Figure 4.

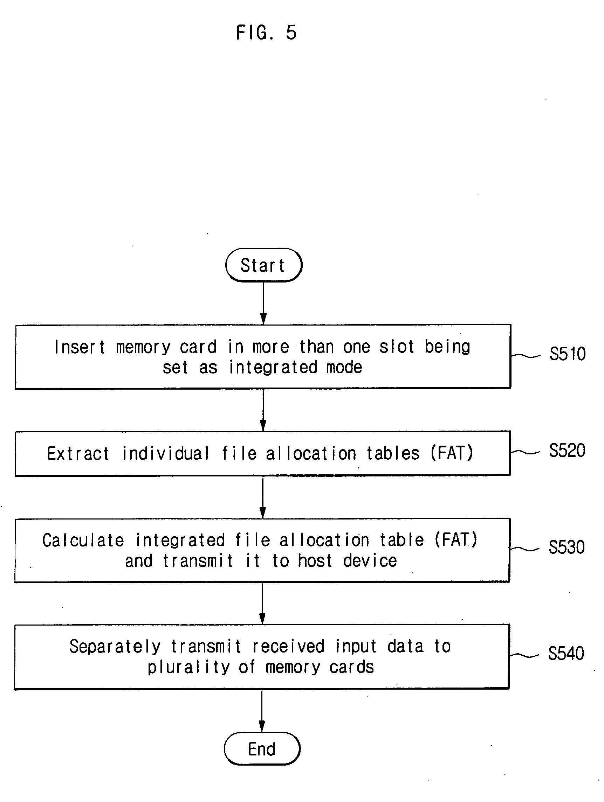

According to a second embodiment of the present invention, a processing unit 230 calculates an integrated file allocation table (FAT) by using individual file allocation tables (FAT) of the memory cards in order to recognize each storage capacity of a plurality of memory cards inserted into the slot unit 250 . Likewise, the processing unit 230 allows the host device 100 to recognize the plurality of memory cards as a memory card of large capacity by using the calculated integrated file allocation table (FAT). This will be described in more detail below as referring to Figure 5.

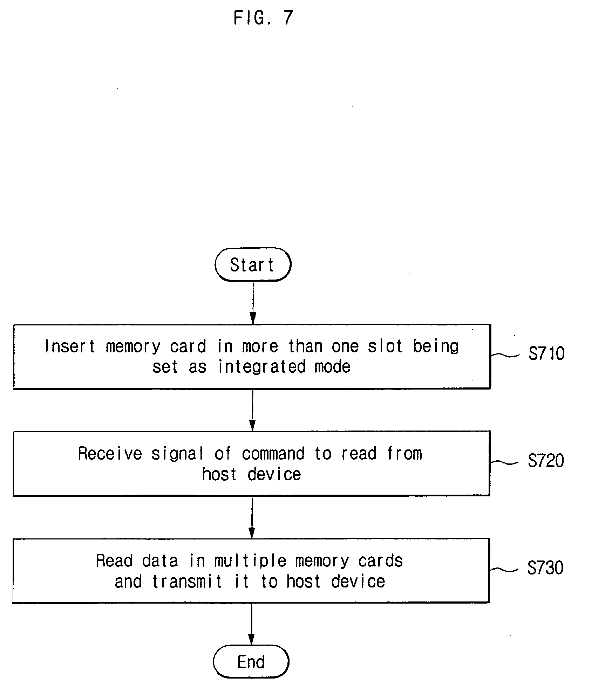

The processing unit 230 can allow the host device 100 to read data from the plurality of memory cards by using the integrated file allocation table (FAT) in response to a signal of a read command received from the host device 100. This will be described in more detail below as referring to Figure 7.

Until now, the structure of the memory card changer 200 has been described in accordance with certain embodiments of the present invention as referring to Figure 2. Referring to Figure 3, a method of storing data in a plurality of memory cards performed by a memory card changer 200 in accordance with a first embodiment of the present invention will be described below.

Figure 3 is a flow chart showing how a memory card changer 200 stores data in accordance with a first embodiment of the present invention.

Referring to Figure 3, suppose that if the memory card changer 200 receives a store command from the switch 220 in process S310, the switch 220 of the memory card changer 200 is set to be in the integrated mode, and the plurality of memory cards is inserted in the slot unit 250.

In process S320, the processing unit 230 can extract information related to each storage capacity of the memory cards inserted into the slot unit 250. In process S330, the processing unit 230 can calculate an integrated storage capacity by adding individual storage capacities and transmit the integrated storage capacity to a host device 100. Here, the host device 100 can recognize the plurality of memory cards as a single memory card having the integrated storage capacity by using the information related to the integrated storage capacity in accordance with the first embodiment of the present invention.

In process S340, the processing unit 230 can transmit the data received from the host device 100 to a pre-designated *N*th slot. The processing unit 230, for example, can designate orderly numbers on the slots where the memory cards are inserted in a descending order of individual storage capacities of the memory cards or designate orderly numbers on the slots regardless of the individual storage capacities.

Before the processing unit 230 stores the data in the *N*th slot ( *N* being a pre-designated number of pre-designated slot as a natural number), a conversion unit 240 can convert a transfer method of the data in accordance with the interface of the Nth slot.

In process S350, the processing unit 230 can monitor whether or not a capacity occupied by the data that is being stored in an *N*th memory card reaches a pre-determined capacity level of the *N*th memory card inserted in the *N* slot. If the data is stored enough, the processing unit can stop storing the data and process to next process S360.

In the process S360, the processing unit 230 can generate *N*th division information and store it in the *N* memory card. Here, the *N*th division information can be used for restoring the data. For example, the *N*th division information can contain information related to how the data is divided and which memory cards inserted into the slots the divided data is stored.

For example, the *N*th division information can contain code information related to a timewhen the storing the data is stopped. Here, it is evident to any person of ordinary skills in the art that the *N*th division information can be modified and changed according to an environment to which the memory card changer 200 is applied.

In the process S360, the processing unit 230 proceeds to the process S340 by adding 1 to the Nth. That is, the processing unit 230 can transmit data next to the last data have been stored in *N*th slot to an *N*+*1*th slot that is a next designated slot after the Nth slot. Then, the processing unit 230 can proceed to the process S340 and the process S350 for the *N*+*1*th slot.

Meanwhile, if the pre-determined storage capacity of the *N*th memory card is not fully occupied by the input data in the process S350, the processing unit 230 can determine that storing the data in the *N*th memory card inserted into the *N*th slot is completed. As such, the storing the data is stopped, and the processing unit 230 can generate and store division information that contains information that the storing the data is completed, which is not illustrated in Figure 3.

The first embodiment of the present invention described as referring to Figure 3 will be described again with certain examples below.

Suppose that, in the process S310, the first to third memory cards having storage capacities of 1 giga byte, 1 giga byte and 0.5giga byte, respectively, are inserted into the first to third slots, respectively. In the process S320, the processing unit 320 extracts individual storage capacities. In the process S330, the processing unit 230 calculates an integrated storage capacity as a total of 2.5 giga byte. After that, the processing unit 230 transmits information related the integrated storage capacity to the host device 100, and the host device 100 recognizes the first to third memory cards as a single memory card of large capacity having the integrated storage capacity of 2.5 gigabyte.

Here, the process S340 and the process S360 will be described by assuming that each memory card is orderly numbered regardless of individual capacities of the memory cards, and data is stored up to 100% of the individual storage capacities of the memory cards.

If the memory card changer 200, which receives 1.7 gigabyte of data from the host device 100, stores the data in the memory cards, the processing unit 230 stores 1giga bite of data in the first memory card and generates a first division information and then stores the first division information in the first memory card. After that, the processing unit stores the data, i.e. remaining 0.7giga byte of data, in the second memory card.

In this case, the processing unit 230 can use the remaining storage capacity, i.e. 0.3 gigabyte, of the second memory card and the storage capacity of the third memory card for a next use of storing data.

Described with reference to Figure 2 is the switch 220, which is set to be in the integrated mode and mounted on each slot of the slot part. Here, the card changer 200 can distinguish each slot whether one is in the integrated mode or another is in the independent mode.

For example, suppose that memory cards are inserted into the 1 st to 10Nth slots. And, suppose that switches of the 1st to 7th slots are in the integrated mode. Moreover, suppose that switches of the 8th to 10th slots are in the independent mode. Accordingly, the process S310 to 360 in Figure 3 can be applied to the memory cards inserted into the 1 st to 7th slots. That is, the host device 100 recognizes the memory cards inserted into the 1 st to 7th slots as a single large capacity memory card, but recognizes the memory cards inserted into the 8th to 10th slots as individual memory cards.

According to the first embodiment of the present invention, after the switch 220 is in the integrated mode, the processing unit 230 initializes the process of storing data described above if the memory cards inserted in the slot unit 250 are replaced, a new memory card is inserted, or the existing memory cards are removed.

When the 1^{st} to 3^{rd} memory cards are inserted into the 1st to 3rd slots, respectively, and the host device 100 recognizes the integrated memory cards as a single large capacity memory card, a 4th memory card, for instance, can be inserted into the 4th memory slot. In this case, since the processing unit 230 senses that the forth memory card is inserted into the 4th memory slot, the processing unit 230 can re-perform the process S310 to S360 for the 1st to 4th memory cards which is in the integrated mode. Consequently, the host device 100 recognizes the 1 st to 4th memory cards as a single large capacity memory card.

So far as referring to Figure 3, the method of storing data performed by the memory card changer 200 has been described according to a third embodiment of the present invention. Referring to Figure 4, a method of reading data from the memory card changer 200 in accordance with the first embodiment of the present invention will be described below. Figure 4 is a flow chart showing how a memory card changer 200 reads data in accordance with the first embodiment of the present invention.

Referring to Figure 4, suppose that a switch 220 is set at an integrated mode, and one or more memory cards are inserted in at least one memory slot.

Suppose that the 1 st to 5th memory cards are inserted in the 1 st to 5th memory slots, respectively, and data is dividedly stored in the 1 st to 5th memory cards, and each data stored in the 1 st to 5th memory cards is called the 1 st to 5th division data respectively.

In process S420, the processing unit 230 extracts the 1st to 5th division information from the 1st to 5th memory cards and sorts an order of the 1 st to 5th division data by using the 1st to 5th division information. For instance, suppose that the original data is dividedly successively stored in the 1 st, 2nd, 3rd, 4th and 5th memory card. In this case, the processing unit 230 recognizes that the original data is dividedly successively stored in the 1st to 5th memory cards as mentioned above by using the 1 st to 5th division information.

In the process S420, the processing unit 230 can successively transmit each of the division data that have been stored in order of the 1st, 2nd, 3rd, 4th and 5th memory card to the host device 100 through the connection unit 210. Here, the conversion unit 240 can convert the method of transferring the data to the host device 100 in accordance with an interface type of the connection unit 210.

For instance, in the process S420, the original data can be divided and successively stored in order of the 1st, 2nd, 5th, 4th and 3rd memory card. Here, the processing unit 230 can recognize that the original data was divided and successively stored in order of the 1 st, 2nd, 5th, 4th and 3rd memory card by the 1 st to 5th division information. Accordingly, in process S430, the processing unit 230 can transmit the division data, which are sucessively stored in order of the 1st, 2nd, 5th, 4th and 3rd memory card, to the host device 100 through the connection unit 210.

So far as referring to Figure 4, the method of reading data in the memory card changer 200 has been described according to the first embodiment of the present invention. Referring to Figure 5 to Figure 7, a method of storing data in and reading data from the memory card by using an integrated file allocation table (FAT) in accordance with a second embodiment of the present invention will be described later.

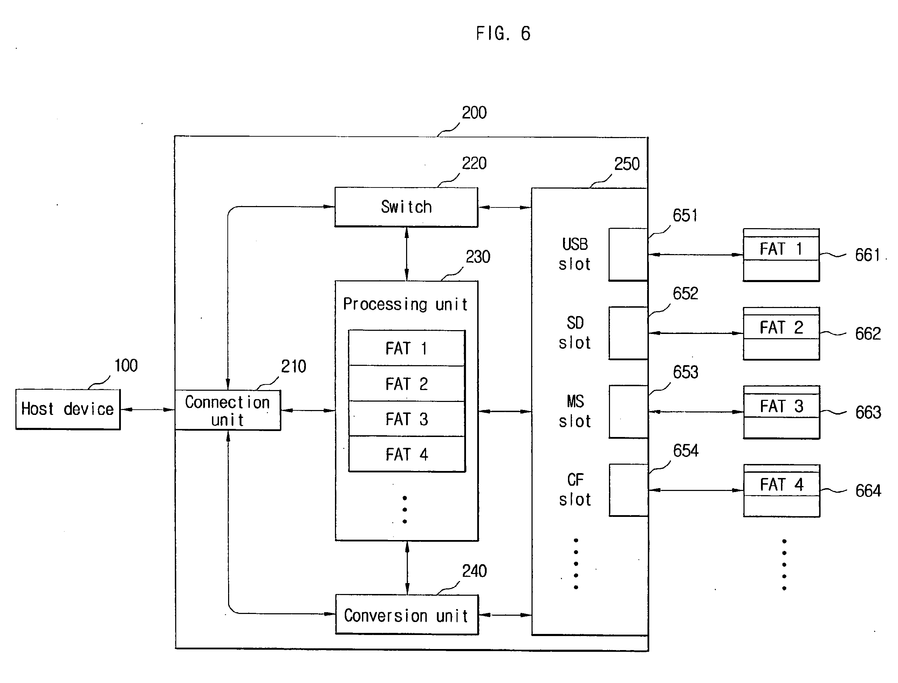

Figure 5 is a flow chart showing how a memory card changer 200 stors data in accordance with a second embodiment of the present invention, and Figure 6 shows a process of calculating an integrated file allocation table (FAT) performed by a processing unit 230. Here, Figure 5 is mainly described but if needs, Figure 6 will be described as well.

Referring to Figure 5, suppose that when the memory card changer 200 receives a write command from the host device 100, a switch 220 of the memory card changer 200 can be set to an integrated mode, and a plurality of memory cards is inserted into the slot unit 250.

In process S520, the processing unit 230 extracts individual file allocation tables (FAT) of the memory cards inserted in the slot unit 250. Then, in process S530, the processing unit 230 calculates an integrated file allocation table (FAT) by using the individual file allocation tables (FAT) and transmits these to the host device 100.

Referring to Figure 6, the process S320 to S330 of Figure 4 will be described in more detail below.

For example, the slot unit 250 can include a Universal Serial Bus (USB) slot 451, a Secure Digital (SD) slot 542, a Memory Stick (MS) slot 453, and a Compact Flash (CF) slot 454.It is assumed that the first to forth memory cards are inserted into each slot, and each FAT of the first to forth memory cards are set to be a FAT1 661, a FAT2 662, a FAT3 663 and a FAT4 664.

According to the second embodiment of the present invention, the processing unit 230 can calculate the integrated FAT by reading the file allocation tables (FAT) 661 to 664 of the first to forth memory cards. For example, the processing unit 230 can calculate the integrated FAT in which data is successively stored in a descending order of individual storage capacities by using the individual capacity information of the first to forth memory cards. For another instance, the processing unit 230 can create the integrated FAT for storing data in the memory card having a fast data input/output speed in which the data input/output speed is already set in accordance with interfaces of the first to forth memory cards. The processing unit 230 can transmit the calculated integrated FAT to the host device 100 through the connection unit 210. Therefore, the host device 100 can recognize the plurality of memory cards inserted into the memory card changer 200 as a single large capacity memory card by using the received integrated FAT. Here, the integrated storage capacity of the large memory card recognized by the host device 100 can be the sum of individual storage capacities of the first to forth memory cards.

Referring to Figure 5, in the process S540, the memory card changer 200 can receive a signal of a data-write command from the host device 100. Then, the memory card changer 200 can divide and transmit the divided data to the plurality of memory cards in response to the signal of the data-write command. Here, the signal of the data-write command contains position information related to where each data is to be stored in the memory cards. More specifically, the signal of the data-write command can contain information related to a memory card in which the data is to stored and position information related to which storage space of the memory card includes the data.

Therefore, the processing unit 230 can read information about the memory cards and a location where each data is to be stored in the memory cards in accordance with the FAT information included in the signal of the write command, and can transmit the data to the location where the data is to be stored. Here, the conversion unit 240 can convert a transfer mode of the data in accordance with an interface of each slot while transmitting the data to the location.

The second embodiment of the present invention as referring to Figure 5 and Figure 6 will be described with particular examples below.

Suppose that in the process S510, the 1 st through 4th memory cards, having individual storage capacities of 1 giga bite, 0.5giga bite, 0.5giga bite and 0.3giga bite respectively, are inserted in the 1 st through 4th slots respectively. In the process S520, the processing unit 320 calculates individual file allocation tables (FAT). And in the process S530, the processing unit calculates an integrated file allocation table (FAT) by using the individual file allocation tables (FAT) and transmits the integrated FAT to the host device 100. Therefore, the host device 100 can recognize the 1 st through 4th memory cards as a single memory card of large capacity having the integrated storage capacity of 2.3giga bite. Likewise, in the process S540, in response to FAT information being included in a signal of the write command transmitted from the host device 100 to the card changer 220, the card changer 220 can divide and store the received data in the 1st through 4th memory cards.

Meanwhile, if the 1 st through 3rd memory cards are set at the integrated mode and the 4th memory card is set at the independent mode, the host device 100 can recognize the 1 st to 3rd memory cards as a single large capacity memory card and the 4th memory card as another single memory card.

So far as referring to Figure 5 and Figure 6, the method of storing data in the memory card changer 200 has been described according to the second embodiment of the present invention.

Referring to Figure 7, the method of reading data in the memory card changer in accordance with the second embodiment of the present invention will be described below.

Figure 7 is a flow chart showing how a memory card changer 200 reads data in accordance with a second embodiment of the present invention.

Referring to Figure 7, suppose that in process S710, a switch 220 is set at the integrated mode, and a plurality of memory cards is inserted in the slot unit 250.

Furthermore, in process S720, the processing unit 230 can receive a signal of a read command from the host device 100 through the connection unit 210. In this case, in process S730, the processing unit 230 can read data from the plurality of memory cards in response to the signal of the read command and transmit the data to the host device 110. Here, the signal of the read command contains FAT information about where each data is stored in the memory cards.

Here, the FAT information, as referring to Figure 5, is created from the host device 100 by using the integrated FAT which is used for recognizing the plurality of memory cards collectively. More specifically, the host device 100 recognizes the plurality of memory cards as a single memory card of large capacity through the integrated FAT. Likewise, the data to be stored and empty space information about the amount of space available on the total storage space for storing data, can be transmitted to the data changer 200 after reading the empty space information. Here, the empty space information can be indicated by using the FAT information.

Referring to Figure 7, the method of reading data in the memory card changer according to the second embodiment of the present invention has been described.

While the present invention has been described in detail with reference to certain embodiments, the embodiments are for illustrative purposes only and do not limit the present invention. Therefore, those with ordinary skill in the art will understand that many variations and other embodiments may be made without departing from the scope of the present invention as set forth in the appended claims.

## Claims

1. A memory card changer (200) being connected to a host device (100) and adapted to read data stored in a plurality of memory cards (112, 113, 114), or store data in the plurality of memory cards (112, 113, 114), the memory card changer comprising:
a connection unit (210), configured to interchange the data with the host device;
a slot unit (250), the plurality of memory cards being attachable to the slot unit; and
a processing unit (230);
**characterised in that**:
the processing unit (230) is configured to allow the host device (100) to recognize each capacity of the plurality of memory cards (112, 113, 114) as one large storage capacity of memory or to recognise some of the plurality of memory cards individually and other plurality of memory cards as one large storage capacity of memory, each of the plurality of memory cards having been inserted into the slot unit (250).

2. The memory card changer (200) of claim 1, further comprising
a switch (220) configured to select one of an integrated mode and an independent mode, the integrated mode recognizing each storage capacity as one large storage capacity of memory, the independent mode recognizing each storage capacity individually,
wherein if the integrated mode is selected, the processing unit (230) allows the host device (100) to recognize a storage capacity integrated from each of the storage capacities of the plurality of memory cards (112, 113, 114).

3. The memory card changer (200) of claim 2, wherein, if the integrated mode is selected and a write command is received from the host device (100),
the processing unit (230) divides data received from the host device and transmits the divided data to each slot of the slot unit (250).

4. The memory card changer (200) of claim 3, wherein the processing unit (230) is adapted to transmit the data to an *N*th slot of the slot unit (250),
whereas, if a capacity occupied by the data that is being stored in an *N*th memory card (*N* being a pre-designated number) reaches a pre-determined level, the *N*th memory card being inserted into the *N*th slot,
storing the data is stopped;
*N*th division information is generated and stored in the *N*th memory card; and data next to last data that has stored in the *N*th memory card, is transmitted to an *N*+*1*th slot of the slot unit.

5. The memory card changer (200) of claim 4, wherein the *N* is designated in a descending order in accordance with the storage capacity of the memory cards (112, 113, 114) inserted in the slot unit (250).

6. The memory card changer (200) of claim 2, wherein, if the integrated mode is selected and a command to read data is received from the host device (100),
the processing unit (230) extracts the division information from the memory cards (112, 113, 114), respectively having been inserted into the slot unit (250) and
transmits the data stored in the memory cards (112, 113, 114) to the connection unit (210) by using the division information,
wherein the division information, stored in the memory card (112, 113, 114) when the data is divided and stored, includes information on how the data is divided and stored in the memory cards (112, 113, 114).

7. The memory card changer (200) of claim 1, wherein the processing unit (230) is configured to allow the host device (100) to recognize individual storage capacities of the plurality of memory cards (112, 113, 114) as one large storage capacity of memory or to recognise some of the plurality of memory cards individually and other plurality of memory cards as one large storage capacity of memory by using individual file allocation tables (FAT) of the plurality of memory cards, each of the plurality of memory cards having been inserted into the slot unit (250).

8. The memory card changer (200) of claim 7, wherein the processing unit (230) is adapted to calculate an integrated file allocation table (FAT) by using the individual file allocation tables (FAT) and allow the host device (100) to recognize the memory cards (112, 113, 114) as a memory card having the integrated file allocation table (FAT).

9. The memory card changer (200) of claim 7, further comprising
a switch (220) configured to select one of an integrated mode and an independent mode, the integrated mode allowing the individual file allocation tables (FAT) to be recognized as one large storage capacity of memory, the independent mode allowing the individual file allocation tables (FAT) to be recognized individually,
wherein if the integrated mode is selected, the processing unit (230) allows the host device (100) to recognize the individual file allocation tables (FAT) integratedly.

10. The memory card changer (200) of claim 9, wherein, if the integrated mode is selected and a write command is received from the host device (100),
the processing unit (230) divides data received from the host device (100) and transmits the divided data to each slot of the slot unit (250),
whereas the write command comprises FAT information related to memory cards (112, 113, 114), the data being to be stored in the memory cards.

11. The memory card changer (200) of claim 9, wherein, if the integrated mode is selected and a read command is received from the host device (100),
the processing unit (230) reads data from the memory cards (112, 113, 114) of the slot unit (250) and transmits the data to the connection unit (210),
whereas the read command comprises FAT information related to memory cards (112, 113, 114), the data being read in the memory cards.

12. The memory card changer (200) of claim 9, wherein the switch (220) is mounted on each slot of the slot unit (250), and
the processing unit (230) allows the switch to integratedly recognize the individual file allocation tables (FAT) of the memory card (112, 113, 114) inserted in a slot, the slot being selected to be in the integrated mode.

13. The memory card changer (200) according to any one of claims 1 or 7, further comprising:
a conversion unit (240) configured to convert one of a first transfer method and a second transfer method to the other transfer method, the data being received from and transferred to the connection unit (210) by using the first transfer method, the data being received from and transferred to the slot by using the second transfer method, and each of the transfer methods corresponding to an interface type of the connection unit and the memory cards (112, 113, 114) in the slot unit (250).

14. The memory card changer (200) according to any one of claims 1 or 7, wherein the memory card (112, 113, 114) is one of Compact Flash (CF), Smart Media (SM ), MultiMediaCard (MMC), XD-Picture Card (XD), Memory Stick (MS), Memory Stick Duo (MS Duo), Memory Stick Pro Duo (MS Pro Duo), MagicGate (MG), Mini-Secure Digital (Mini SD), RS-MultiMediaCard (RS), Trans Flash (T-Flash), Memory Stick PRO true 4-bit (MS PRO) and Secure Digital (SD).

15. The memory card changer (200) according to any one of claims 1 or 7,
wherein the connection unit (210) has one interface type of Universal Serial Bus (USB), Secure Digital (SD), MultiMediaCard (MMC), XD-Picture Card (XD) and Trans Flash (T-Flash).

## Patentansprüche

1. Speicherkartenwechsler (200), der mit einem Hostgerät (100) verbunden ist und die Aufgabe hat, in mehreren Speicherkarten (112, 113, 114) gespeicherte Daten zu lesen oder Daten in den mehreren Speicherkarten (112, 113, 114) zu speichern, wobei der Speicherkartenwechsler Folgendes umfasst:
eine Verbindungseinheit (210) zum Austauschen der Daten mit dem Hostgerät;
eine Steckplatzeinheit (250), wobei die mehreren Speicherkarten an der Steckplatzeinheit angebracht werden können; und
eine Verarbeitungseinheit (230);
**dadurch gekennzeichnet, dass**:
die Verarbeitungseinheit (230) so konfiguriert ist, dass sie es dem Hostgerät (100) ermöglicht, jede Kapazität der mehreren Speicherkarten (112, 113, 114) als eine große Speicherkapazität eines Speichers zu erkennen oder einige der mehreren Speicherkarten individuell und andere der mehreren Speicherkarten als eine große Speicherkapazität eines Speichers zu erkennen, wobei jede der mehreren Speicherkarten in die Steckplatzeinheit (250) eingesteckt wurde.

2. Speicherkartenwechsler (200) nach Anspruch 1, der ferner Folgendes umfasst:
einen Schalter (220) zum Wählen eines integrierten Modus oder eines unabhängigen Modus, wobei im integrierten Modus jede Speicherkapazität als eine große Speicherkapazität eines Speichers erkannt wird und im unabhängigen Modus jede Speicherkapazität individuell erkannt wird,
wobei es die Verarbeitungseinheit (230), wenn der integrierte Modus gewählt wird, dem Hostgerät (100) ermöglicht, eine Speicherkapazität integriert von jeder der Speicherkapazitäten der mehreren Speicherkarten (112, 113, 114) zu erkennen.

3. Speicherkartenwechsler (200) nach Anspruch 2, wobei, wenn der integrierte Modus gewählt und ein Schreibbefehl vom Hostgerät (100) empfangen wird,
die Verarbeitungseinheit (230) vom Hostgerät empfangene Daten aufteilt und die aufgeteilten Daten zu jedem Steckplatz der Steckplatzeinheit (250) sendet.

4. Speicherkartenwechsler (200) nach Anspruch 3, wobei die Verarbeitungseinheit (230) die Aufgabe hat, die Daten zu einem *N*-ten Steckplatz der Steckplatzeinheit (250) zu senden,
wobei die *N*-te Speicherkarte in den *N*-ten Steckplatz eingesteckt wird, wenn eine Kapazität, die von den Daten belegt wird, die in einer *N*-ten Speicherkarte (wobei *N* eine vorbestimmte Zahl ist) gespeichert sind, einen vorbestimmten Stand erreicht,
das Speichern der Daten gestoppt wird;
*N*-te Aufteilungsinformationen erzeugt und in der *N*-ten Speicherkarte gespeichert werden; und
Daten neben letzten in der *N*-ten Speicherkarte gespeicherten Daten zu einem *N*+1-ten Steckplatz der Steckplatzeinheit gesendet werden.

5. Speicherkartenwechsler (200) nach Anspruch 4, wobei *N* in einer absteigenden Reihenfolge je nach der Speicherkapazität der in die Steckplatzeinheit (250) eingesteckten Speicherkarten (112, 113, 114) bezeichnet wird.

6. Speicherkartenwechsler (200) nach Anspruch 2, wobei, wenn der integrierte Modus gewählt und ein Befehl zum Lesen von Daten vom Hostgerät (100) empfangen wird:
die Verarbeitungseinheit (230) die Aufteilungsinformationen aus den jeweils in der Steckplatzeinheit (250) steckenden Speicherkarten (112, 113, 114) extrahiert, und
die in den Speicherkarten (112, 113, 114) gespeicherten Daten anhand der Aufteilungsinformationen zur Verbindungseinheit (210) überträgt,
wobei die beim Aufteilen und Speichern der Daten in der Speicherkarte (112, 113, 114) gespeicherten Aufteilungsinformationen Informationen darüber enthalten, wie die Daten aufgeteilt und in den Speicherkarten (112, 113, 114) gespeichert werden.

7. Speicherkartenwechsler (200) nach Anspruch 1, wobei die Verarbeitungseinheit (230) so konfiguriert ist, dass sie es dem Hostgerät (100) ermöglicht, individuelle Speicherkapazitäten der mehreren Speicherkarten (112, 113, 114) als eine große Speicherkapazität eines Speichers zu erkennen oder einige der mehreren Speicherkarten individuell zu erkennen und andere der mehreren Speicherkarten als eine große Speicherkapazität eines Speichers mit Hilfe der individuellen Dateizuordnungstabellen (FAT) der mehreren Speicherkarten zu erkennen, wobei jede der mehreren Speicherkarten in die Steckplatzeinheit (250) eingesteckt wurde.

8. Speicherkartenwechsler (200) nach Anspruch 7, wobei die Verarbeitungseinheit (230) die Aufgabe hat, eine integrierte Dateizuordnungstabelle (FAT) anhand der individuellen Dateizuordnungstabellen (FAT) zu berechnen und es dem Hostgerät (100) zu ermöglichen, die Speicherkarten (112, 113, 114) als eine Speicherkarte mit der integrierten Dateizuordnungstabelle (FAT) zu erkennen.

9. Speicherkartenwechsler (200) nach Anspruch 7, der ferner Folgendes umfasst:
einen Schalter (220) zum Wählen eines integrierten Modus oder eines unabhängigen Modus, wobei es der integrierte Modus zulässt, dass die individuellen Dateizuordnungstabellen (FAT) als eine große Speicherkapazität eines Speichers erkannt werden, und der unabhängige Modus es zulässt, dass die individuellen Dateizuordnungstabellen (FAT) individuell erkannt werden,
wobei es die Verarbeitungseinheit (230), wenn der integrierte Modus gewählt wird, dem Hostgerät (100) ermöglicht, die individuellen Dateizuordnungstabellen (FAT) integriert zu erkennen.

10. Speicherkartenwechsler (200) nach Anspruch 9, wobei, wenn der integrierte Modus gewählt wird und ein Schreibbefehl vom Hostgerät (100) empfangen wird,
die Verarbeitungseinheit (230) vom Hostgerät (100) empfangene Daten aufteilt und die aufgeteilten Daten zu jedem Steckplatz der Steckplatzeinheit (250) sendet,
wobei der Schreibbefehl FAT-Informationen in Bezug auf Speicherkarten (112, 113, 114) umfasst, wobei die Daten in den Speicherkarten gespeichert werden sollen.

11. Speicherkartenwechsler (200) nach Anspruch 9, wobei, wenn der integrierte Modus gewählt und ein Lesebefehl vom Hostgerät (100) empfangen wird,
die Verarbeitungseinheit (230) Daten aus den Speicherkarten (112, 113, 114) der Steckplatzeinheit (250) liest und die Daten zur Verbindungseinheit (210) sendet,
wobei der Lesebefehl FAT-Informationen in Bezug auf Speicherkarten (112, 113, 114) umfasst, wobei die Daten in den Speicherkarten gelesen werden.

12. Speicherkartenwechsler (200) nach Anspruch 9, wobei der Schalter (220) an jedem Steckplatz der Steckplatzeinheit (250) montiert ist, und
die Verarbeitungseinheit (230) es zulässt, dass der Schalter die individuellen Dateizuordnungstabellen (FAT) der in einen Steckplatz steckenden Speicherkarte (112, 113, 114) integriert erkennt, wobei der Steckplatz im integrierten Modus gewählt ist.

13. Speicherkartenwechsler (200) nach Anspruch 1 oder 7, der ferner Folgendes umfasst:
eine Umwandlungseinheit (240) zum Umwandeln einer ersten Übertragungsmethode oder einer zweiten Übertragungsmethode in die jeweils andere Übertragungsmethode, wobei die Daten mit der ersten Übertragungsmethode von der Verbindungseinheit (210) empfangen und zu derselben übertragen werden, wobei die Daten mit der zweiten Übertragungsmethode von dem Steckplatz empfangen und zu demselben übertragen werden, und wobei jede der Übertragungsmethoden einem Schnittstellentyp der Verbindungseinheit und den Speicherkarten (112, 113, 114) in der Steckplatzeinheit (250) entspricht.

14. Speicherkartenwechsler (200) nach Anspruch 1 oder 7, wobei die Speicherkarte (112, 113, 114) eine der folgenden ist: Compact Flash (CF), Smart Media (SM), MultiMediaCard (MMC), XD-Picture Card (XD), Memory Stick (MS), Memory Stick Duo (MS Duo), Memory Stick Pro Duo (MS Pro Duo), MagicGate (MG), Mini-Secure Digital (Mini SD), RS-MultiMediaCard (RS), Trans Flash (T-Flash), Memory Stick PRO true 4-bit (MS PRO) und Secure Digital (SD).

15. Speicherkartenwechsler (200) nach Anspruch 1 oder 7,
wobei die Verbindungseinheit (210) einen der folgenden Schnittstellentypen hat:
Universal Serial Bus (USB), Secure Digital (SD), MultiMediaCard (MMC), XD-Picture Card (XD) und Trans Flash (T-Flash).

## Revendications

1. Un dispositif de changement de carte mémoire (200) raccordé à un dispositif hôte (100) et adapté de façon à lire des données conservées en mémoire dans une pluralité de cartes mémoires (112, 113, 114) ou à placer en mémoire des données dans la pluralité de cartes mémoires (112, 113, 114), le dispositif de changement de carte mémoire comprenant :
une unité de connexion (210) configurée de façon à échanger les données avec le dispositif hôte,
une unité à fentes (250), la pluralité de cartes mémoires pouvant être raccordées à l'unité à fentes, et
une unité de traitement (230)
**caractérisé en ce que** :
l'unité de traitement (230) est configurée de façon à permettre au dispositif hôte (100) de considérer chaque capacité de la pluralité de cartes mémoires (112, 113, 114) comme étant une capacité de stockage en mémoire de grande taille ou de considérer certaines de la pluralité de cartes mémoires individuellement et
d'autres de la pluralité de cartes mémoires comme étant une capacité de stockage en mémoire de grande taille, chacune des cartes de la pluralité de cartes mémoires ayant été insérée dans l'unité à fentes (250).

2. Le dispositif de changement de carte mémoire (200) selon la Revendication 1, comprenant en outre
un commutateur (220) configuré de façon à sélectionner un mode parmi un mode intégré et un mode indépendant, le mode intégré considérant chaque capacité de stockage comme étant une capacité de stockage en mémoire de grande taille, le mode indépendant considérant chaque capacité de stockage individuellement,
où, si le mode intégré est sélectionné, l'unité de traitement (230) permet au dispositif hôte (100) de considérer une capacité de stockage intégrée à partir de chacune des capacités de stockage de la pluralité de cartes mémoires (112, 113, 114).

3. Le dispositif de changement de carte mémoire (200) selon la Revendication 2, où, si le mode intégré est sélectionné et qu'une commande d'écriture est reçue du dispositif hôte (100),
l'unité de traitement (230) divise les données reçues du dispositif hôte et transmet les données divisées à chaque fente de l'unité à fentes (250).

4. Le dispositif de changement de carte mémoire (200) selon la Revendication 3, où l'unité de traitement (230) est adaptée de façon à transmettre les données à une *N*ième fente de l'unité à fentes (250),
où, si une capacité occupée par les données qui sont en train d'être placées en mémoire sur une *N*ième carte mémoire (*N* étant un nombre pré-désigné) atteint un niveau prédéterminé, la *N*ième carte mémoire est insérée dans la *N*ième fente,
la mise en mémoire des données est interrompue,
des *N*ièmes informations de division sont générées et placées en mémoire dans la *N*ième carte mémoire, et
les données à côté des dernières données qui ont été placées en mémoire dans la *N*ième carte mémoire sont transmises à une *N*+1me fente de l'unité à fentes.

5. Le dispositif de changement de carte mémoire (200) selon la Revendication 4, où le *N* est désigné dans un ordre décroissant en fonction de la capacité de stockage des cartes mémoires (112, 113, 114) insérées dans l'unité à fentes (250).

6. Le dispositif de changement de carte mémoire (200) selon la Revendication 2, où, si le mode intégré est sélectionné et qu'une commande de lecture des données est reçue du dispositif hôte (100),
l'unité de traitement (230) extrait les informations de division des cartes mémoires (112, 113, 114) ayant été respectivement insérées dans l'unité à fentes (250) et
transmet les données conservées en mémoire dans les cartes mémoires (112, 113, 114) à l'unité de connexion (210) au moyen des informations de division,
où les informations de division, placées en mémoire dans les cartes mémoires (112, 113, 114) lorsque les données sont divisées et placées en mémoire, comprennent des informations sur la manière dont les données sont divisées et placées en mémoire dans les cartes mémoires (112, 113, 114).

7. Le dispositif de changement de carte mémoire (200) selon la Revendication 1, où l'unité de traitement (230) est configurée de façon à permettre au dispositif hôte (100) de considérer des capacités de stockage individuelles de la pluralité de cartes mémoires (112, 113, 114) comme étant une capacité de stockage en mémoire de grande taille ou de considérer certaines de la pluralité de cartes mémoires individuellement et d'autres de la pluralité de cartes mémoires comme étant une capacité de stockage en mémoire de grande taille en utilisant des tables d'allocation de fichiers (FAT) individuelles de la pluralité de cartes mémoires, chacune des cartes de la pluralité de cartes mémoires ayant été insérée dans l'unité à fentes (250).

8. Le dispositif de changement de carte mémoire (200) selon la Revendication 7, où l'unité de traitement (230) est adaptée de façon à calculer une table d'allocation de fichiers (FAT) intégrée en utilisant les tables d'allocation de fichiers (FAT) individuelles et à permettre au dispositif hôte (100) de considérer les cartes mémoires (112, 113, 114) comme étant une carte mémoire possédant la table d'allocation de fichiers (FAT) intégrée.

9. Le dispositif de changement de carte mémoire (200) selon la Revendication 7, comprenant en outre
un commutateur (220) configuré de façon à sélectionner un mode parmi un mode intégré et un mode indépendant, le mode intégré permettant aux tables d'allocation de fichiers (FAT) individuelles d'être considérées comme une capacité de stockage en mémoire de grande taille, le mode indépendant permettant aux tables d'allocation de fichiers (FAT) individuelles d'être considérées individuellement,
où, si le mode intégré est sélectionné, l'unité de traitement (230) permet au dispositif hôte (100) de considérer les tables d'allocation de fichiers (FAT) individuelles de manière intégrée.

10. Le dispositif de changement de carte mémoire (200) selon la Revendication 9, où, si le mode intégré est sélectionné et qu'une commande d'écriture est reçue du dispositif hôte (100),
l'unité de traitement (230) divise les données reçues du dispositif hôte (100) et transmet les données divisées à chaque fente de l'unité à fentes (250),
où la commande d'écriture comprend des informations FAT relatives aux cartes mémoires (112, 113, 114), les données étant destinées à être placées en mémoire dans les cartes mémoires.

11. Le dispositif de changement de carte mémoire (200) selon la Revendication 9, où, si le mode intégré est sélectionné et qu'une commande de lecture est reçue du dispositif hôte (100),
l'unité de traitement (230) lit des données à partir des cartes mémoires (112, 113, 114) de l'unité à fentes (250) et transmet les données à l'unité de connexion (210),
où la commande de lecture comprend des informations FAT relatives aux cartes mémoires (112, 113, 114), les données étant lues dans les cartes mémoires.

12. Le dispositif de changement de carte mémoire (200) selon la Revendication 9, où le commutateur (220) est monté sur chaque fente de l'unité à fentes (250), et
l'unité de traitement (230) permet au commutateur de considérer de manière intégrée les tables d'allocation de fichiers (FAT) individuelles de la carte mémoire (112, 113, 114) insérée dans une fente, la fente étant sélectionnée de façon à être dans le mode intégré.

13. Le dispositif de changement de carte mémoire (200) selon l'une quelconque des Revendications 1 ou 7, comprenant en outre :
une unité de conversion (240) configurée de façon à convertir un procédé de transfert parmi un premier procédé de transfert et un deuxième procédé de transfert vers l'autre procédé de transfert, les données étant reçues de et transférées vers l'unité de connexion (210) au moyen du premier procédé de transfert, les données étant reçues de et transférées vers la fente au moyen du deuxième procédé de transfert, et chacun des procédés de transfert correspondant à un type d'interface de l'unité de connexion et les cartes mémoires (112, 113, 114) dans l'unité à fentes (250).

14. Le dispositif de changement de carte mémoire (200) selon l'une quelconque des Revendications 1 ou 7, où la carte mémoire (112, 113, 114) est une carte parmi Compact Flash (CF), Smart Media (SM ), MultiMediaCard (MMC), XD-Picture Card (XD), Memory Stick (MS), Memory Stick Duo (MS Duo), Memory Stick Pro Duo (MS Pro Duo), MagicGate (MG), Mini-Secure Digital (Mini SD), RS-MultiMediaCard (RS), Trans Flash (T-Flash), Memory Stick PRO true 4-bit (MS PRO) et Secure Digital (SD).

15. Le dispositif de changement de carte mémoire (200) selon l'une quelconque des Revendications 1 ou 7,
où l'unité de connexion (210) possède un type d'interface parmi Universal Serial Bus (USB), Secure Digital (SD), MultiMediaCard (MMC), XD-Picture Card (XD) et Trans Flash (T-Flash).
